(19) Europäisches Patentamt
European Patent Office
Office européen des brevets

(11) EP 4 575 344 B1

(12) EUROPEAN PATENT SPECIFICATION

(45) Date of publication and mention of the grant of the patent:
**29.04.2026 Bulletin 2026/18**

(21) Application number: **23219498.5**

(22) Date of filing: **21.12.2023**

(51) International Patent Classification (IPC):
***F24S 20/20*** *(2018.01)* ***F24S 40/52*** *(2018.01)*
***F24S 50/40*** *(2018.01)*

(52) Cooperative Patent Classification (CPC):
**F24S 20/20; F24S 40/52; F24S 50/40; F24S 80/20;**
F24S 2201/00

# (54) SYSTEM AND METHOD FOR IMPROVED THERMO-MECHANICAL MONITORING OF A SOLAR RECEIVER

SYSTEM UND VERFAHREN ZUR VERBESSERTEN THERMOMECHANISCHEN ÜBERWACHUNG EINES SOLAREMPFÄNGERS

SYSTÈME ET PROCÉDÉ DE SURVEILLANCE THERMOMÉCANIQUE AMÉLIORÉE D’UN RÉCEPTEUR SOLAIRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**25.06.2025 Bulletin 2025/26**

(73) Proprietor: **JOHN COCKERILL RENEWABLES S.A.**
**4100 Seraing (BE)**

(72) Inventors:
- **SMOLDERS, Manuel**
  **4537 VERLAINE (BE)**
- **BAUTHIER, Thomas**
  **4280 HANNUT (BE)**
- **JEUNIAUX, Pierre-Yves**
  **4053 EMBOURG (BE)**
- **REGNIER, Victor**
  **4053 EMBOURG (BE)**
- **FARINELLE, Adrien**
  **6730 TINTIGNY (BE)**

(74) Representative: **AWA Benelux**
**Parc d’affaires Zénobe Gramme - Bât. K**
**Square des Conduites d’Eau 1-2**
**4020 Liège (BE)**

(56) References cited:
**CN-A- 109 856 182**
**US-A1- 2010 006 087**
**US-B2- 9 903 613**

- **CANTONE MARCO ET AL: "One-side heating test and modeling of tubular receivers equipped with turbulence promoters for solar tower applications", APPLIED ENERGY, ELSEVIER SCIENCE PUBLISHERS, GB, vol. 277, 26 July 2020 (2020-07-26), XP086287126, ISSN: 0306-2619, [retrieved on 20200726], DOI: 10.1016/J.APENERGY.2020.115519**
- **LI YAWEI ET AL: "Experimental and numerical study on the preheating process of a lab-scale solar molten salt receiver", RENEWABLE ENERGY, PERGAMON PRESS, OXFORD, GB, vol. 182, 21 October 2021 (2021-10-21), pages 602 - 614, XP086875333, ISSN: 0960-1481, [retrieved on 20211021], DOI: 10.1016/J.RENENE.2021.10.051**
- **ZUO YUHANG ET AL: "Numerical and experimental study on thermal performance and thermal stress of molten salt receiver during preheating", APPLIED THERMAL ENGINEERING, PERGAMON, OXFORD, GB, vol. 238, 11 November 2023 (2023-11-11), XP087442049, ISSN: 1359-4311, [retrieved on 20231111], DOI: 10.1016/J.APPLTHERMALENG.2023.121986**
- **MISHRA PRASHANT ET AL: "Numerical analysis of cavity receiver with parallel tubes for cross-linear concentrated solar system", ENERGY, ELSEVIER, AMSTERDAM, NL, vol. 220, 21 December 2020 (2020-12-21), XP086498167, ISSN: 0360-5442, [retrieved on 20201221], DOI: 10.1016/J.ENERGY.2020.119609**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 575 344 B1

- LIAO ZHIRONG ET AL: "Allowable flux density on a solar central receiver", RENEWABLE ENERGY, vol. 62, 23 September 2013 (2013-09-23), pages 747 - 753, XP028740421, ISSN: 0960-1481, DOI: 10.1016/J.RENENE.2013.08.044
- ANONYMOUS: "California Energy Comission", SOLAR TWO CENTRAL RECEIVER, 1 October 1999 (1999-10-01), pages 1 - 232, XP055504141, Retrieved from the Internet <URL:http://www.energy.ca.gov/reports/2002-01-10_600-00-017.PDF> [retrieved on 20180904]

## Description

### Field of the Invention

The present invention relates to the technical field of concentrated solar power (CSP) plants or systems. In particular the invention relates to the thermo-mechanical monitoring of a molten salt solar receiver (MSSR) for CSP plants with central tower.

The solution provided by the present invention could be used in any application where thermo-mechanical monitoring is needed.

The solution disclosed in the present application is an improvement of certain aspects of the solution presented in former patent application WO 2018/177696 A1.

### Background and Prior Art

The solar receiver of a CSP tower plant has to face several risks during a normal day of operation, from the first phase of preheating to the last phase of drainage and cooling down. It could suffer for instance from thermo-mechanical stress due to high temperature heterogeneity or be damaged in case of freezing of salt in its tubes. It is therefore important to have a monitoring system able to analyze and prevent all the different hazards that could happen to the receiver during operation in order to be able to react in time and ensure the integrity of the receiver.

During a typical day of operation, the solar receiver passes not only through the hot salt production phase but also through many other phases of operation (preheating, filling of the receiver, etc.) that could lead to exposure of the receiver to different hazards (thermo-mechanical stress, salt freezing, corrosion, fatigue, etc.).

Besides, given that the conditions on site vary with time (atmospheric transmittance during the day, degradation of tubes paint, etc.), it is also important to integrate and consider these variations in the system to optimize its accuracy.

Finally, it should be noted that the hardware used in the monitoring system can sometimes have a failure or lead to a false measurement that could impact directly the accuracy of the system.

All these constraints need to be considered in the monitoring system.

Thermal monitoring of solar receivers used in CSP tower technology is generally performed by IR cameras allowing the capture the thermal image of the receiver surface as already used in other domains like manufacturing for control and detection of localized overheating points.

Among the patents dealing with the manufacturing of IR cameras, the following patents can be cited :

- FLIR patents US 2008/0265162 A1 and US20130088604 A1 ;

- Westinghouse Electric Corporation patent US 5689734 disclosing a pressurized camera system for viewing an object located in a region under contamination (e.g., oil, water, particulate matter, or the like). The system is capable of being internally pressurized above ambient pressure, so that the contamination is prevented from entering the camera system to foul the camera. The system includes a housing having an interior and a view port. An electronic sensor is disposed in the housing opposite the port for sensing the object and for generating an electrical output signal that travels along a conductor connected to the sensor.

Among the patents related to the use of such cameras in manufacturing processes, IRCON patent WO 2004/020926 A1 can be cited, which is related to temperature control during metal melting.

In the solar domain, the following patents related to a heliostat field control can be cited : to SolarReserve, US 2013/0104963 A1 ; to Brightsource, US 8,360,051 B2, US 9,222,702 B2 and US 2013/0139804 A1 ; to eSolar (WO2010/017415 A2).

Concerning the thermal monitoring of solar receiver panels in CSP tower technology, only two relevant patents were identified. The first one is the SolarReserve patent filed in the USA in 2004 (US 2004/0086021 A1). In this patent, the solution proposed consists in capturing a thermal image of the solar receiver thanks to IR cameras. These IR cameras are located at a distance from the solar receiver and positioned on the ground or at a specific height level. The connection of IR cameras could also be a wireless connection. The second one was patented by Brightsource in 2009 (US 8,931,475 B2). This patent is an improvement of the one proposed by SolarReserve.

In this last patent, Brightsource proposes a system and method for directly monitoring the energy flux of a solar receiver, comprising :

- a measurement of IR radiation is achieved using one or more IR cameras. The external surface of the solar receiver tube is controlled by one pixel at minimum ;
- thermocouples installed for :

◦ in and out fluid temperature measurement ;

◦ tube surface temperature measurement ;

- a meteorological station for weather control (temperature, wind velocity, humidity) ;
- a flow transmitter calibrated to send a signal to the control system ;
- a control system which receives all signals, recalculate the temperature (based on the received signals), recalibrates the flow and redirects the heliostats ;
- a method consisting of:

  ◦ determining energy flux distribution on the receiver based on IR cameras measurements ;
  ◦ recalculating the flux distribution based on data from the flow transmitter, the thermocouples and the meteorological station ;
  ◦ generating an alarm signal in case of attaining a critical temperature ; and
  ◦ focusing/defocusing heliostats according to these measurements.

Based on patent analysis, the above-mentioned Brightsource patent seems to be the most relevant and complete patent in this domain. However, the proposed solution is limited to the thermal monitoring of the solar receiver panel tubes. This solution is not capable to :

- recalculate with high accuracy the maximal temperature on each solar receiver tube ;
- ensure a thermo-mechanical monitoring of the solar receiver tubes.

These issues have been solved in document WO 2018/177696 A1 which discloses a concentrated solar power (CSP) plant comprising a plurality of heliostats or heliostat field, a substantially cylindrical solar energy receiver, preferably a molten salt solar receiver (MSSR), located atop a central tower and having an external surface covered with receiver panels and a heat shield adjacent the solar receiver, the heliostats reflecting solar energy to said external surface of the receiver, each receiver panel comprising a plurality of heat exchanger tubes for transporting a heat transfer fluid, which are partly exposed on the external surface of the receiver and comprising a thermo-mechanical monitoring system intended to ensure the integrity of the solar receiver panel tubes in operation, said thermomechanical monitoring system comprising a data processing system for calculating and/or supplying respectively the maximum temperature, temperature profile and/or absorbed power profile in each heat exchanger tube and theoretical mechanical strains assigned to each heat exchanger tube as a function of the temperature provided by the imaging devices, in order to control if the operating point of an area located on the solar receiver is within an operating envelope in the 2D-space theoretical strain/Tmax defining predefined temperature and strain thresholds and in order to emit alerts in the event of exceeding said predefined temperature and strain thresholds, where being outside said envelope, and further to require heliostat radiation defocusing on said area.

The proposed solution could be used for any application in which a thermo-mechanical monitoring is needed.

## Aims of the Invention

The present invention aims at providing a solution for ensuring the integrity of a solar receiver during the different phases of the operation, by avoiding excessive thermo-mechanical loading or other hazards on the tubes which compose the receiver surface, when they receive a very high thermal flux level.

In particular the present disclosure proposes some improvement of the solution of the above-mentioned WO 2018/177696 A1 of the same applicant, namely evaluating new parameters, in addition of the temperature profile of the tubes ; monitoring new phenomena, in addition to evaluating the strain in the tubes ; proposing different levels of alarm, in addition to requesting a local defocus if needed ; or improving the cell resolution. The new targeted functionalities comprise more reliable calibration of IR cameras, consideration of tube coating in thermal calculations and protection against hardware failure.

In addition, the present invention aims at extending the phenomena monitored, in addition to monitoring of strains in tubes, to monitoring of corrosion, fatigue, salt freezing in the tubes and temperature unbalance within a panel.

A constant goal of the present invention is always to be able to offer a complete scope with a simplified guarantee of the whole installation, and thus to propose at least a similar scope of liability as main competitors.

## Summary of the Invention

A first aspect of the present invention relates to a concentrated solar power plant comprising a plurality of heliostats or heliostat field, a substantially cylindrical solar energy receiver, consisting of a molten salt solar receiver, located atop a central tower and having an external surface covered with receiver panels, the heliostats reflecting solar energy to said external surface of the receiver, each receiver panel comprising a plurality of heat exchanger tubes for transporting a heat transfer fluid being a molten salt, which are partly exposed on the external surface of the receiver and comprising a thermo-mechanical monitoring system to ensure the integrity of the solar receiver panel tubes in different operation phases, said thermomechanical monitoring system comprising at least :

- a monitoring system ;
- a plurality of infrared cameras located on ground for measuring infrared radiation emitted by the external surface of the receiver and providing a panel temperature-dependent signal in an area of said external surface, said signal being transmitted by transmitting means to the monitoring system ;
- one or more flowmeters for measuring the flow rate of heat-transfer fluid in the heat exchanger tubes and thermocouples arranged respectively at the inlet and the outlet of the exchanger tubes, the measurements provided by the flowmeters and the thermocouples being transmitted to the monitoring system for calculating the energy balance absorbed by the heat transfer fluid in the receiver as well as other thermo-mechanical parameters ;
- means for receiving weather data measured and transmitted to the monitoring system by a weather station located on the site of the concentrated solar power plant ;

wherein :

- several thermocouples are located on the solar receiver itself, said thermocouples being attached on the non-irradiated side or backside of the exchanger tubes, so that the monitoring system is able to use the data measured by the thermocouples to recalculate by interpolation a temperature map covering the entirety of the non-irradiated surface of the solar receiver ;
- using the tube emittance $\varepsilon$ obtained from the measurements of the external surface of the receiver obtained from the infrared cameras and the salt temperature in the tubes obtained from the thermocouples during circulation mode, and the atmospheric transmittance $\tau$ obtained from the measurements of the weather data, the monitoring system is configured to calibrate the raw temperature measurements $\boldsymbol{T_{raw}}$ acquired by the infrared cameras, so as to obtain calibrated temperatures $\boldsymbol{T_{cam}}$.

According to a preferred embodiment, the monitoring system is configured to calculate and/or supply respectively the maximum temperature, temperature profile and/or absorbed power profile in each heat exchanger tube and theoretical mechanical strains assigned to each heat exchanger tube as a function of the temperature provided by the infrared cameras, taking into account the temperature of the heat transfer fluid at the inlet and the outlet of said exchanger tubes, in order to control if the operating point of an area located on the solar receiver is within an operating envelope in the 2D-space theoretical strain/$T_{max}$ defining predefined temperature and strain thresholds and in order to emit alerts in the event of exceeding said predefined temperature and strain thresholds, in case the real operating point is outside said envelope and further to require at least partial heliostat radiation defocusing on said area.

A second aspect of the present invention relates to a method for monitoring the concentrated solar power plant described above, wherein the monitoring of the solar receiver is ensured during the following phases of day/night operation :

- preheating of empty tubes with a solar flux at a temperature sufficiently high to avoid salt freezing during molten salt filling ;
- filling of the tubes with molten salt leading to static salt present in the tubes ;
- activating power mode with salt put into circulation in the tubes of the receiver ;
- activating circulation mode, without solar flux on the solar receiver, in particular for calibration purposes ;
- draining of the tubes performed during a shutdown phase ;
- thawing possibly performed with solar flux after operation, with empty tubes, if frozen salt has been detected in the solar receiver after draining ;
- activating standby mode during the night or when no operation is ongoing on the receiver ;

said monitoring being based at least on part of the measured and/or calculated parameters such as tube external frontside temperature $T_{cam}$, tube crest temperature $T_{o,max}$, thermocouple temperature on tube backside $T_{back,therm}$, tube minimum external backside temperature $T_{back}$, tube maximum internal frontside temperature $T_{i,max}$, direct normal irradiation DNI, ambient air temperature $T_{atm}$, relative humidity w, wind speed, wind direction, as well as at least part of the suitable parameters cited in former patent application WO 2018/177696 A1.

According to preferred embodiments, the monitoring method comprises one of the following characteristics or a suitable combination thereof :

- during preheating, thawing, filling and draining modes, the parameters used are tube crest temperature $T_{o,max}$, tube external frontside temperature $T_{cam}$ and minimum external backside temperature $T_{back}$, wherein $T_{o,max}$ and $T_{back}$ are calculated at the cell resolution (x, y) by the respective analytical equations :

    ◦

    $$T_{o,\max(x,y)} = f_1(T_{cam(x,y)})$$

    where :

    $f_1$ is an empirical function depending on the IR cameras angle measurement ;
    $T_{cam(x,y)}$ is the average external frontside temperature measured on every cell by the IR cameras, and calibrated by the control system ;

    ◦

    $$T_{back} = f(T_{cam}, \; T_{back,therm})$$

    on cells including a thermocouple and interpolated on the cells without thermocouple ;

- during static salt mode, the parameters used are tube crest temperature $T_{o,max}$, tube external frontside temperature $T_{cam}$ and minimum external backside temperature $T_{back}$, wherein $T_{o,max}$ and $T_{back}$ are calculated at the cell resolution (x, y) by the analytical equation :

    ◦

    $$T_{o,\max(x,y)} = f_2(T_{cam(x,y)})$$

    where :

    $f_2$ ($f_2 \neq f_1$) is an empirical function depending on the IR cameras angle measurement ;
    $T_{cam(x,y)}$ is the average external frontside temperature measured on every cell by the IR cameras, and calibrated by the control system ;

    ◦

    $$T_{back} = f(T_{cam}, \; T_{back,therm})$$

    on cells including a thermocouple and interpolated on the cells without thermocouple ;

- a plurality of alarm levels are used by the monitoring system to require gradual actions to smoothen system reaction in case of danger for the solar receiver integrity and minimize as much as possible the impact on the operation, each alarm level using one threshold and one timer setting for its activation, meaning that an alarm will be activated once the threshold's value has been reached/overcome and set time has elapsed ;

- four levels of alarm are used :

    ◦ a first level in which a warning is sent to an operator when a first threshold has been attained, with no further action required and without any timer setting ;

◦ a second level in which said warning comprises the communication of coordinates of a rectangle including problematic cells and an estimation of the focused power to be removed in order to respect again the exceeded monitored criterion, with a timer setting ;

◦ a third level in which a full defocus of the solar receiver is required, with a timer setting ; and

◦ a fourth level in which a full defocus of the solar receiver is required, without timer setting ;

- in addition to the strain due to mechanical stress, the monitoring system monitors a number of physical phenomena during all the operation modes or during at least one operation mode, on the basis of criteria, these physical phenomena consisting of fatigue, corrosion, unbalanced temperature profile within a determined panel and salt freezing in tubes ;

- thermo-mechanical stress is monitored on the basis of a criterion active on the temperature difference $\boldsymbol{T_{o,max(x,y)}}$ - $\boldsymbol{T_{back(x,y)}}$ during preheating, thawing, filling and draining modes, indicating possible significant stress in the tubes and putting at risk the integrity and lifetime of the receiver, in case this difference exceeds a given threshold ;

- fatigue is monitored on the basis of a criterion active on $\boldsymbol{T_{o,max(x,y)}}$ during preheating mode, the value of this parameter being limited by the monitoring system in order to limit the fatigue created in the tubes during said mode and further to ensure the lifetime of the receiver ;

- corrosion is monitored on the basis of a criterion active on maximal internal wall temperature $\boldsymbol{T_{i,max(x,y)}}$ during power and circulation modes, to limit the value of this parameter and the corrosion phenomenon in order to further ensure the receiver's lifetime ;

- unbalanced temperature profile within a panel is monitored on the basis of a criterion active on the average of $\boldsymbol{T_{cam(x,y)}}$ to ensure keeping a certain level of temperature homogeneity on all the panels ;

- salt freezing in the tubes is monitored on the basis of at least one criterion, called smart filling release, active during preheating mode and possibly allowing a release to the filling mode, based on an equation predicting the salt temperature in all the tubes, the criterion being validated and the filling mode activated if the predicted salt temperature on all the cells exceeds a certain threshold, said equation used to predict the above salt temperature being as follows:

$$T_{Salt,i+1} = f_3\ (T_{cam,i}, T_{back,i}, T_{Salt,i})$$

where

◦ $f_3$ is an empirical function ;

◦ $T_{Salt,i+1}$ is the predicted salt temperature entering in the cell located just above cell i ;

◦ $T_{cam,i}$ is the average external frontside temperature measured on cell i by the IR cameras ; and

◦ $T_{back,i}$ is the minimum backside temperature on cell i ;

- a verification of the accuracy of the inputs in monitoring system is ensured by performing the following actions :

◦ consideration of acceptable ranges for the salt mass flow $\boldsymbol{\dot{M}_{salt,circuit}}$ and the salt temperature at the inlet of the receiver $\boldsymbol{T_{salt\,in\text{-}out,panel}}$, a warning message being communicated in case one of these two parameters is out of its respective range ;
◦ verification of a variation between two consecutive readings for the salt mass flow $\boldsymbol{\dot{M}_{salt,circuit}}$, a recalculation being performed considering the value of the inside heat transfer coefficient correction factor, in case the difference between said two readings of $\boldsymbol{\dot{M}_{salt,circuit}}$ exceeds a threshold ; and
◦ emittance and transmittance calibrations for the average external frontside temperature $\boldsymbol{T_{cam(x,y)}}$.

A third aspect of the present invention relates to a data processing apparatus comprising means for carrying out the method describes above.

A fourth aspect of the present invention relates to a computer program comprising instructions which, when the program is executed by a computer, cause the computer to carry out the method described above, when the computer is part of the monitoring system in communication with :

- the IR detection cameras located each remotely from the thermal zone of interest,
- the flowmeters used for measuring the flow rate of heat-transfer fluid in the heat exchanger tubes and the thermocouples arranged respectively at the inlet and the outlet of the exchanger tubes,
- the thermocouples arranged at the non-irradiated backside part of the heat exchanger tubes, and
- the weather station.

A fifth aspect of the present invention relates to a non-transitory computer-readable medium having stored thereon the instructions of the program described above.

## Brief Description of the Drawings

FIG. 1 represents an example of the IR cameras ground positioning around a solar tower.

FIG. 2 represents a view with an IR camera ground positioning relatively to the position of the solar tower and of the heliostat field.

FIG. 3 represents the non-irradiated side of a solar receptor panel with a number of thermocouples attached to that side.

FIG. 4 schematically represents a solar receptor with its two levels or resolution : panel and cell.

FIG. 5 schematically represents the location of the temperatures measured and calculated on a tube.

FIG. 6 schematically represents the parts of a tube hidden to the IR cameras.

FIG. 7 schematically shows how the local defocus information is communicated.

## Description of Preferred Embodiments of the Invention

### 1. Hardware

In addition to the hardware already included in the previous patent application WO 2018/177696 A1 (IR cameras - see FIG. 1 and FIG. 2, salt mass flow meters, salt thermocouples), the monitoring system of the present invention now also gathers information coming from other hardware :

- data from additional thermocouples placed at the backside of the tubes of the solar receiver ;
- weather station information.

It is to be noted that the weather station is not, strictly speaking, part of the monitoring system. The system receives and utilizes values that come from the general on-site weather station.

Besides, the software of the monitoring system is now also able to calibrate itself the measurement coming from the IR cameras to consider new phenomena such as the degradation of the paint coating on the tubes and variation of atmospheric transmittance throughout the day (see patent application WO 2018/177696 A1).

#### 1.1. *Backside thermocouples*

More concretely, these sensors are used to measure the temperature of the metal on the non-irradiated part of the tubes, also called "backside" of the tubes. A typical localization of these thermocouples on a panel is shown on FIG.3.

The monitoring system does not receive values for the complete non-irradiated surface of the tubes, but only for a few points per panel, typically between 12 and 16 points per panel depending on the site. Advantageously, the software of the monitoring system is able to use these measurements to recalculate (by interpolation) a temperature map covering the entirety of the non-irradiated surface with the same resolution as the IR camera temperature map (more advantageously with cells of 100 x 100 mm).

*1.2. Weather station*

Some information measured by a weather station located on site is received by the monitoring system (FIG. 2). More specifically, the parameters received are preferably the followings:

- Direct normal irradiation, or DNI (W/m2) ;
- Ambient temperature (°C) ;
- Relative humidity (%) ;
- Wind speed (m/s) ; and
- Wind direction (°).

2. Software

As in the previous patent application of the same applicant (WO 2018/177696 A1), the main goal of the software presently developed is to collect the data coming from all the hardware elements mentioned above, to analyze them and to potentially request one or more actions to ensure the solar receiver's safety.
According to one embodiment, said software integrates several new features in comparison with its first version :

- it ensures the solar receiver's safety during all the phases/modes of operation, and not only during hot salt production as in its previous version ;
- it monitors new phenomena, in addition to the strain already included in the first version, since it also allows to improve prevention of corrosion, fatigue, or unbalanced temperature within each solar panel and salt freezing in the tubes ;
- it considers the impact of the tubes coating thickness in the heat transfer calculations ;
- it provides protection regarding potential failure of a part of the hardware used, based on the monitoring of the measurement range and the measurement variation ;
- it provides adaptation to site conditions : consideration of the evolution of atmospheric transmittance throughout the day and consideration of the actual state of the paint coating on the tubes (emittance calibration) in the IR cameras measurement.

*2.1. Different modes of operation*

As mentioned above, the solar receiver goes through several modes having very different conditions throughout a day of operation. The monitoring system is now able to adapt its functioning along the day, by changing the parameters considered and the criteria monitored, to ensure a monitoring of the receiver during the following different phases:

- **Preheating** of empty tubes with solar flux to a temperature sufficiently high to allow avoiding salt freezing in the tubes during the filling phase ;

- **Filling** of the tubes with molten salt ;

- Once the solar receiver is filled up, **static salt** is present in the tubes ;

- **Power** mode is then activated when the salt is put into circulation in the tubes of the receiver ;

- **Circulation** mode, without solar flux on the solar receiver, can sometimes be performed for calibration purposes ;

- **Draining** of the tubes realized during the shutdown phase ;

- **Thawing** possibly realized with solar flux after operation (with empty tubes) in case frozen salt has been detected in the solar receiver after draining.

Finally **standby** mode is active during the night or when no operation is ongoing on the receiver.
Table 1 below shows a summary of the different modes and their respective conditions :

Table 1

| Mode/Conditions | Solar Flux on SR | SR completely empty | SR completely filled | Salt circulation in SR |
|---|---|---|---|---|
| **Preheating Thawing** | Yes | Yes | No | No |
| **Filling Draining** | Yes | No | No | No |
| **Static Salt** | Yes | No | Yes | No |
| **Circulation** | No | No | Yes | Yes |
| **Power** | Yes | No | Yes | Yes |
| **Standby** | No | No | No | No |

The new parameters and criteria monitored in each mode are described in the sections below.

*2.2. Resolution of the parameters*

The considered resolution varies for the different parameters. Three different resolutions are used in the monitoring software : "cell", "panel" and "receiver". FIG. 4 shows a schematic representation of the different levels of resolution used.

The cells used in the monitoring system have dimensions of approximately 100mm x 100mm, which is smaller than the cells used in the previous version of the software.

Table 2 below is a summary of the resolutions used for the new parameters described in section 2.3.

Table 2

| Parameter | Symbol | Unit | Measured/ Calculated | Resolution |
|---|---|---|---|---|
| Tube external frontside temperature | $T_{cam}$ | °C | Measured | Cell |
| Tube crest temperature | $T_{o,max}$ | °C | Calculated | Cell |
| Thermocouple temperature on tube backside | $T_{back,therm}$ | °C | Measured | Panel (several per panel) |
| Tube minimum external backside temperature | $T_{back}$ | °C | Calculated | Cell |
| Tube maximum internal frontside temperature | $T_{i,max}$ | °C | Calculated | Cell |
| Direct Normal Irradiation | DNI | $W.m^{-2}$ | Measured | Receiver |
| Ambient air temperature | $T_{atm}$ | °C | Measured | Receiver |
| Relative humidity | $w$ | % | Measured | Receiver |
| Wind speed | - | $m.s^{-1}$ | Measured | Receiver |
| Wind direction | - | ° | Measured | Receiver |

*2.3. New parameters used in the system*

The new parameters evaluated in the monitoring system are described in this section.

First, during the **Preheating, Filling, Draining, Thawing** and **Static Salt** modes, the system includes the evaluation of the tube crest temperature $T_{o,max}$, the minimum backside temperature $T_{back}$ and the average external frontside temperature $T_{cam}$ represented on FIG. 5.

The temperatures measured by the IR cameras ($T_{cam}$ on FIG. 5) are now calibrated by the software to consider the degradation of the tubes paint coating (i.e. its real emittance) and the current atmospheric transmittance before being used in the calculations (see patent application WO 2018/177696 A1).

Also, as explained in the previous patent application (WO 2018/177696 A1), the cameras have a small angle of measurement on the tubes, resulting in the fact that some parts of the tubes are not seen by the cameras. These non-visible parts, represented on FIG. 6, are also considered in the calculation performed by the software during the Preheating, Filling, Thawing, Draining and Static Salt modes (as explained in section 2.4).

Finally, it is to be noted that the equations used in the **Power** and **Circulation** modes are almost the same as those already presented in the previous patent application (WO 2018/177696 A1); the only modification being that the tubes coating thickness is now considered in the heat transfer calculations. Some new criteria are also monitored in the new version of the software during these modes (see section 2.5).

### *2.4. Equations*

This section will give more details regarding the equations used to calculate the new parameters. As already mentioned, the monitored criteria, the parameters and their corresponding equations depend on the mode active on site.

Since they have similar conditions (presence of solar flux, no salt), **Preheating** and **Thawing** modes use the same set of parameters, equations and criteria. Moreover, the **Filling** and **Draining** are also almost identical to these modes, with a small exception regarding the criteria considered. Indeed, a part of the solar receiver is still empty during these phases and equations considering empty tubes were preferred since the part without salt is more at risk than the filled part, as the presence of salt at a temperature around 300°C tends to homogenize the tube temperature during these steps.

**Static Salt** mode is somewhat different of the previously mentioned modes, in the equations and criteria monitored, since the presence of salt (without circulation) has to be considered.

Finally, **Circulation** and **Power** modes are identical regarding the parameters since their conditions (namely salt circulation within the tubes) are very similar.

#### 2.4.1. Preheating, Thawing, Filling and Draining modes

***Tube crest temperature (also called $T_{o,max}$)***

This parameter is calculated at cell level with the following equation:

$$T_{o,\max(x,y)} = f_1(T_{cam(x,y)})$$

where

- $f_1$ is a function empirically determined by the inventors and depending on the IR cameras measurement angle;
- $T_{cam(x,y)}$ is the average external frontside temperature measured on every cell by the IR cameras (and calibrated by the software, see patent application WO 2018/177696 A1).

The analytical equation has been developed by help of numerical simulations reproducing the conditions in these different modes.

***Minimum backside temperature (also called $T_{back}$)***

This parameter is calculated at each cell by using the average external frontside temperature ($T_{cam}$) measured by the IR cameras and the temperature on the backside of the tubes measured by thermocouples (also called $T_{back,therm}$, represented on FIG. 5) :

$$T_{back} = f(T_{cam}, T_{back,therm})$$

Since the number of thermocouples per panel is limited (placed on *n* horizontal lines of m thermocouples, see section 1.1) and that there are therefore less measurements than cells, the minimum backside temperature on every cell ($T_{back}$) is determined by interpolation of the difference $\Delta T_{x,y} = T_{cam} - T_{back,therm}$ calculated on the cells with a thermocouple.

More concretely, considering:

- *m* as the number of thermocouples on a given horizontal line ;
- *n* as the number of thermocouples on a given vertical line ;
- $(x, y)$ as the coordinate variable of a cell ;
- $(x_i , y_j)$ as the coordinate variable of the thermocouples ;

the different coordinates of the thermocouples are therefore $(x_0, y_0)$, $(x_1, y_0)$, $(x_0, y_1)$, ... , $(x_i, y_j)$, ... , $(x_m, y_n)$.

The parameter $T_{back}$ is calculated as follows. Firstly, the difference $T_{cam} - T_{back,therm}$ is calculated on all the cells $(x_i , y_j)$ including a thermocouple :

$$\Delta T_{i,j} = T_{cam-i,j} - T_{back,therm-i,j}$$

Then a linear interpolation is realized horizontally using the lines including the thermocouples, on the cells located between those already calculated above.

For every x included between $x_{i-1}$ and $x_i$, on the different horizontal lines with thermocouples of coordinate $y_j$, it comes :

$$\Delta T_{x,y_j} = \frac{(x - x_{i-1})}{(x_i - x_{i-1})}(\Delta T_{i,j} - \Delta T_{i-1,j})$$

Once the n horizontal lines with thermocouples have been completely determined, a linear interpolation is then realized vertically between the horizontal lines calculated above. For every $y$ included between $y_{j-1}$ and $y_j$, it comes :

$$\Delta T_{x,y} = \frac{(y - y_{j-1})}{(y_j - y_{j-1})}(\Delta T_{i,j} - \Delta T_{i,j-1})$$

Once the difference $\Delta T_{x,y}$ has been calculated on all cells, the parameter can finally be calculated. For every ($x$, $y$) :

$$T_{back(x,y)} = T_{cam(x,y)} - \Delta T_{x,y}$$

2.4.2. Static salt mode

***Tube crest temperature (noted $T_{o,max}$)***

This parameter is calculated for each cell with the following equation :

$$T_{o,max(x,y)} = f_2(T_{cam(x,y)})$$

where

- $f_2$ is a function empirically determined by the inventors and depending on the IR cameras measurement angle ;
- $T_{cam(x,y)}$ is the average external frontside temperature measured on every cell by the IR cameras (and calibrated by the software, see section 2.6.3).

The analytical equation has been developed by help of numerical simulations reproducing the conditions of this mode.

***Minimum backside temperature (noted $T_{back}$)***

This parameter is calculated for each cell. The method used to determine it is the same as described in section 2.4.1.

2.4.3. Circulation and Power modes

All the equations used in these modes can already be found in the previous patent application (WO 2018/177696 A1). Some of these equations have however been modified to take the thickness of the tubes coating into account in the heat transfer balance calculations. More concretely, this new consideration has an impact on the equations of the external wall absorbed radiative energy and the external wall temperature.

*2.5. Alarms and criteria monitored by the system*

This section will first describe the different levels of alarm used by the new version of the monitoring system and their corresponding action. All the new criteria monitored will then be explained more in details.

2.5.1. Different levels of alarm and actions

Four levels of alarm are used by the system according to the invention for being able to require gradual actions in order to smoothen the reaction of the system in case of danger for the solar receiver integrity and to minimize as much as possible the impact on the operation.

Each level uses one threshold and one timer for its activation, meaning that an alarm will be activated once a threshold's value has been reached/overcome and set time has elapsed. Different levels can for example use the same threshold value but with different timer settings. The values of all these parameters are advantageously fine-tuned during the commissioning of each plant.

The actual actions required for each alarm triggering are given as described below :

| Alarm level | Required action | Timer |
|---|---|---|
| Alarm 1 | Informative - no action | No |
| Alarm 2 | Local defocus required on impacted zone | Yes |
| Alarm 3 | Full defocus | Yes |
| Alarm 4 | Full defocus | No |

**Alarm 1**

A signal is sent to the operator to warn that the first threshold has been reached, with no further action required.

**Alarm 2**

This alarm requires a local defocus with timer on the impacted zone, corresponding to the defocusing already described in the previous patent application WO 2018/177696 A1. A signal is sent to the operator with the coordinates of a rectangle including the problematic cells and an estimation of the focused power to remove in order to respect again the prescribed criteria.

More concretely, the rectangle including the problematic cells is defined by the following information (see for example FIG. 7) :

- number of the affected panel ;
- ($x_1$, $y_1$) as the coordinate of the cell at the top-left corner of the rectangle ;
- ($x_2$, $y_2$) as the coordinate of the cell at the bottom-right corner of the rectangle.

The power to defocus ($d\dot{Q}$ in FIG. 7) is communicated in [%].

**Alarm 3 and alarm 4**

Both alarms require a full defocus of the solar receiver (alarm 3 with timer).

2.5.2. Criteria monitored by the system

The system enables to monitor different phenomena that could be a risk for the solar receiver's integrity. In addition to the strain due to thermo-mechanical stress already included in the previous patent application WO 2018/177696 A1, new physical phenomena are now considered by the system :

- fatigue ;
- corrosion ;
- unbalanced temperature profile within a panel ;
- salt freezing in tubes.

It is to be noted however that the thermo-mechanical stress is now monitored during all the modes and not only during the hot production salt as in the previous patent application WO 2018/177696 A1. All these phenomena are monitored via relevant parameters.

The following sections explain more in details how the system monitors these different phenomena.

***Thermo-mechanical stress***

A criterion is active on the temperature difference $\mathbf{T_{o,max(\mathit{x,y})}}$ - $\mathbf{T_{back(\mathit{x,y})}}$ (see section 2.3) during the **Preheating, Thawing, Filling** and **Draining** modes to monitor this phenomenon. If this difference exceeds a certain threshold, it could create significant stress in the tubes and put at risk the integrity and lifetime of the receiver.

***Fatigue***

A criterion on $\mathbf{T_{o,max(\mathit{x,y})}}$ is active during **Preheating** mode to limit the fatigue created in the tubes during this mode and secures the lifetime of the receiver.

As a matter of fact, the temperature cycle faced by the tubes every day, passing from ambient temperature to high production temperature and to ambient temperature again, generates a fatigue phenomenon in the metal of the tubes.

Since the operation could be stopped during the **Preheating,** for example due to an issue on site or bad weather conditions, and in order to avoid consuming a temperature cycle before filling the receiver with salt, the monitoring system will limit the $\mathbf{T_{o,max(\mathit{x,y})}}$ temperature on the receiver until the launching of the **Filling** mode.

***Corrosion***

Since the corrosion between metal and salt becomes more important at high temperature, a criterion on the maximal internal wall temperature $\mathbf{T_{i,max(\mathit{x,y})}}$ (already described in the previous patent application WO 2018/177696 A1) is now active during **Power** and **Circulation** modes to limit this parameter and therefore the corrosion phenomenon in order to ensure the receiver's lifetime.

***Unbalanced temperature profile within a panel***

Given that the tubes of a panel are all connected on a same header, it is important to monitor the temperature homogeneity of the panel during all the modes. As a matter of fact, a big temperature heterogeneity between tubes of a same panel could create important expansion differences and generate plastic deformation on some tubes.

To do so, the average of $\boldsymbol{T_{cam}}_{(x,y)}$ is calculated on each column of cells on the panel to estimate the average temperature of each tube. The criterion is then active on these mean temperatures to ensure keeping a certain level of temperature homogeneity on all the panels.

***Salt freezing in tubes***

The salt used as heat transfer fluid in the receiver has a high solidification temperature (around 240°C). It is therefore important to make sure that the salt remains at a temperature well above this level to avoid any salt freezing, which could create important damages in the receiver.

For this, three criteria are active in the monitoring system. Firstly, a **Smart Filling Release** is active during the **Preheating** mode and will only allow to pass to the Filling mode once the receiver has been sufficiently preheated to avoid any salt freezing when introducing the molten salt in the tubes. More concretely, this release is based on an algorithm predicting the salt temperature in all the tubes as if a filling were performed under the current conditions (inlet salt temperature, frontside and backside temperatures distribution over the whole receiver). Since the filling is realized from the bottom to the top of the tubes, the predicted salt temperature is determined at cell level (see section 2.2) and depends on the conditions of the cell located just below (temperature in the riser is considered for the first bottom row of cells). If the predicted salt temperature on all the cells exceeds a certain threshold, the criterion is then validated and the Filling mode can be activated.

The equation used to predict the above salt temperature is as follows:

$$T_{Salt,i+1} = f_3\ (T_{cam,i}, T_{back,i}, T_{Salt,i})$$

where

- $f_3$ is a function empirically determined by the inventors ;
- $T_{Salt,i+1}$ is the predicted salt temperature entering in the cell located just above cell i ;
- $T_{cam,i}$ is the average external frontside temperature measured on cell i by the IR cameras ; and

- $T_{back,i}$ is the minimum backside temperature on cell i.

It should be noted that the algorithm according to the invention shall allow a slight partial freezing of the salt front, that enters first in the empty panels, at the backside of the tubes. This slight freezing disappears quickly with the introduction of hotter salt in the tubes and is therefore considered as acceptable since it does put at risk neither the tubes nor the operation. This algorithm has been developed based on complex simulations and has also been validated by real site experimentations.

This algorithm also enables to disregard some colder cells with local poor heating or local frontside cooling effect as long as they do not entail risk of tube plugging with frozen salt. It therefore allows flexibility in the preheating by also ensuring the integrity of the solar receiver.

Secondly, a **Critical Low Temperature** criterion is active when the receiver is filled up with salt (in **Static Salt, Power** and **Circulation** modes) to ensure that the temperatures do not approach the freezing point of the salt. More concretely, a monitoring is active on both $\boldsymbol{T_{cam(x,y)}}$ and $\boldsymbol{T_{salt(x,y)}}$, and will first generate an informative alarm once one of these temperatures has become colder than a certain threshold. A second alarm, requiring a trip of the operation, will then be activated if the same parameter has kept decreasing and has passed below a second (lower) threshold. The value used as a threshold has been determined by the inventors as the last value allowing to realize a draining of the receiver without any risk of salt freezing during the process.

Finally, a **Freezing Detection** is also active in the system during the first minutes of the **Standby** mode at the end of the day and is based on the cooling speed of the tubes. Indeed if frozen salt is present in some parts of the tubes after the operation, these parts will take a greater time to cool down and reach ambient temperature again. This detection is only performed in case of low wind to optimize the accuracy of this criterion.

### 2.6. Ensuring the accuracy of the inputs

Verifying the credibility and the accuracy of the inputs is crucial for the monitoring system since the consideration of wrong inputs could lead to inadequate actions which could even be dangerous for the solar receiver. To ensure considering correct inputs, the system has now to perform the following actions :

- consideration of acceptable ranges for the salt mass flow ($\dot{M}_{salt,circuit}$) and the salt temperature at the inlet of the receiver ($T_{salt\ in\text{-}out,panel}$) ;
- verification of the variation between two consecutives readings for the salt mass flow ($\dot{M}_{salt,circuit}$) ;
- calibrations of emittance and transmittance for the average external frontside temperature ($T_{cam(x,y)}$).

#### 2.6.1. Consideration of acceptable range for $\dot{\mathbf{M}}_{\mathbf{salt,circuit}}$ and $\mathbf{T}_{\mathbf{salt\ in\text{-}out,panel}}$

The values of these two parameters (already used in a first version of the software) are verified at every reading to make sure that they are included in an acceptable range. If one of these parameters has a value out of its respective range, the monitoring system will display a warning message mentioning the reference of the hardware concerned.

Besides, for the salt mass flow $\boldsymbol{\dot{M}_{salt,circuit}}$, the system will not consider the measured value and will recalculate it considering the value of the inside heat transfer coefficient correction factor ($f_{h_i}$, already used in the first patent application WO 2018/177696 A1) of the previous calculation loop as fixed. By doing this, the system will be able to calculate by itself a credible value for $\boldsymbol{\dot{M}_{salt,circuit}}$.

#### 2.6.2. Verification of variation between two consecutive readings for $\dot{\mathbf{M}}_{\mathbf{salt,circuit}}$

The system will calculate the difference between two consecutive readings for $\dot{M}_{salt,circuit}$. If this variation exceeds a maximum threshold, as for the consideration of acceptable range, the system will not consider the new value for this parameter and will recalculate it by considering the value of $f_{h_i}$ of the previous calculation loop as fixed.

#### 2.6.3. Calibration of $\mathbf{T}_{\mathbf{cam(x,y)}}$

As mentioned before, the raw temperatures communicated by the IR cameras (also called $\boldsymbol{T_{r\alpha w}}$) are first calibrated by the software to take into account the (changing) transmittance of the atmosphere between the solar receiver and the cameras and the real emittance of the tubes, before being used in the calculations. Both parameters are known to be important to consider in order to have an accurate measurement with infrared cameras.

Symbols of reference

1 CSP tower plant
2 Solar receiver
3 Heliostat field
4 Infrared camera
5 Field of view
7 Different levels of resolution in solar receiver (panel, cell)
8 Receiver panel
9 Exchanger tubes
10 Thermocouples
11 Weather station
12 Average tube external frontside temperature $T_{cam}$
13 Tube crest temperature $T_{o,max}$
14 Thermocouple temperature on tube backside $T_{back,therm}$
15 Minimum backside temperature $T_{back}$
16 Problematic area (not compliant with criterion)

## Claims

**1.** A concentrated solar power plant comprising a plurality of heliostats or heliostat field, a substantially cylindrical solar energy receiver (2), consisting of a molten salt solar receiver, located atop a central tower (1) and having an external surface covered with receiver panels (8), the heliostats reflecting solar energy to said external surface of the receiver (2), each receiver panel (8) comprising a plurality of heat exchanger tubes (9) for transporting a heat transfer fluid being a molten salt, which are partly exposed on the external surface of the receiver and comprising a thermo-mechanical monitoring system to ensure the integrity of the solar receiver panel tubes in different operation phases, said thermomechanical monitoring system comprising at least :

- a monitoring system ;
- a plurality of infrared cameras (4) located on ground for measuring infrared radiation emitted by the external surface of the receiver (2) and providing a panel temperature-dependent signal in an area of said external surface, said signal being transmitted by transmitting means to the monitoring system ;
- one or more flowmeters for measuring the flow rate of heat-transfer fluid in the heat exchanger tubes (9) and thermocouples arranged respectively at the inlet and the outlet of the exchanger tubes (9), the measurements provided by the flowmeters and the thermocouples being transmitted to the monitoring system for calculating the energy balance absorbed by the heat transfer fluid in the receiver as well as other thermo-mechanical parameters (9);
- means for receiving weather data measured and transmitted to the monitoring system by a weather station (11) located on the site of the concentrated solar power plant ;

**characterized in that**

- several thermocouples (10) are located on the solar receiver (2) itself, said thermocouples (10) being attached on the non-irradiated side or backside of the exchanger tubes, so that the monitoring system is able to use the data measured by the thermocouples (10) to recalculate by interpolation a temperature map covering the entirety of the non-irradiated surface of the solar receiver (2) ;
- using the tube emittance $\varepsilon$ obtained from the measurements of the external surface of the receiver obtained from the infrared cameras and the salt temperature in the tubes obtained from the thermocouples during circulation mode, and the atmospheric transmittance $\tau$ obtained from the measurements of the weather data, the monitoring system is configured to calibrate the raw temperature measurements $T_{raw}$ acquired by the infrared cameras (4), so as to obtain calibrated temperatures $T_{cam}$.

**2.** The concentrated solar power plant according to claim 1, wherein the monitoring system is configured to calculate and/or supply respectively the maximum temperature, temperature profile and/or absorbed power profile in each heat exchanger tube (9) and theoretical mechanical strains assigned to each heat exchanger tube (9) as a function of the temperature provided by the infrared cameras (4), taking into account the temperature of the heat transfer fluid at the inlet and the outlet of said exchanger tubes (9), in order to control if the operating point of an area located on the solar receiver is within an operating envelope in the 2D-space theoretical strain/$T_{max}$ defining predefined temperature and strain thresholds and in order to emit alerts in the event of exceeding said predefined temperature and strain thresholds, in case the real operating point is outside said envelope and further to require at least partial heliostat radiation defocusing on said area.

**3.** A method for monitoring the concentrated solar power plant according to claim 1 or 2, wherein the monitoring of the solar receiver (2) is ensured during the following phases of day/night operation :

- preheating of empty tubes with a solar flux at a temperature sufficiently high to avoid salt freezing during molten salt filling ;
- filling of the tubes with molten salt leading to static salt present in the tubes ;
- activating power mode with salt put into circulation in the tubes of the receiver ;
- activating circulation mode, without solar flux on the solar receiver, in particular for calibration purposes ;
- draining of the tubes performed during a shutdown phase ;
- thawing possibly performed with solar flux after operation, with empty tubes, if frozen salt has been detected in the solar receiver after draining ;
- activating standby mode during the night or when no operation is ongoing on the receiver ;

said monitoring being based at least on part of the measured and/or calculated parameters such as tube external frontside temperature $T_{cam}$ (12), tube crest temperature $T_{o,max}$ (13), thermocouple temperature on tube backside $T_{back,therm}$ (14), tube minimum external backside temperature $T_{back}$ (15), tube maximum internal frontside temperature $T_{i,max}$, direct normal irradiation DNI, ambient air temperature $T_{atm}$, relative humidity w, wind speed, wind direction, etc.

**4.** The monitoring method according to claim 3, wherein, during preheating, thawing, filling and draining modes, the parameters used are tube crest temperature $T_{o,max}$ (13), tube external frontside temperature $T_{cam}$ (12) and minimum external backside temperature $T_{back}$ (15), wherein $T_{o,max}$ (13) and $T_{back}$ (15) are calculated at the cell resolution (x, y) by the respective analytical equations :

-

$$T_{o,\max(x,y)} = f_1(T_{cam(x,y)})$$

where :

◦ $f_1$ is an empirical function depending on the IR cameras angle measurement ;
◦ $T_{cam(x,y)}$ is the average external frontside temperature measured on every cell by the IR cameras, and calibrated by the control system ;

-

$$T_{back} = f(T_{cam},\ T_{back,therm})$$

, on cells including a thermocouple and interpolated on the cells without thermocouple.

**5.** The monitoring method according to claim 3, wherein, during static salt mode, the parameters used are tube crest temperature $T_{o,max}$ (13), tube external frontside temperature $T_{cam}$ (12) and minimum external backside temperature $T_{back}$ (15), wherein $T_{o,max}$ (13) and $T_{back}$ (15) are calculated at the cell resolution (x, y) by the analytical equation :

-

$$T_{o,\max(x,y)} = f_2(T_{cam(x,y)})$$

where :

◦ $f_2$ ($f_2 \neq f_1$) is an empirical function depending on the IR cameras angle measurement ;
◦ $T_{cam(x,y)}$ is the average external frontside temperature measured on every cell by the IR cameras, and calibrated by the control system ;

-

$$T_{back} = f(T_{cam}, T_{back,therm})$$

on cells including a thermocouple and interpolated on the cells without thermocouple.

**6.** The monitoring method according to claim 3, wherein a plurality of alarm levels are used by the monitoring system to require gradual actions to smoothen system reaction in case of danger for the solar receiver integrity and minimize as much as possible the impact on the operation, each alarm level using one threshold and one timer setting for its activation, meaning that an alarm will be activated once the threshold's value has been reached/overcome and set time has elapsed.

**7.** The monitoring method according to claim 6, wherein four levels of alarm are used :

- a first level in which a warning is sent to an operator when a first threshold has been attained, with no further action required and without any timer setting ;
- a second level in which said warning comprises the communication of coordinates of a rectangle including problematic cells and an estimation of the focused power to be removed in order to respect again the exceeded monitored criterion, with a timer setting ;
- a third level in which a full defocus of the solar receiver is required, with a timer setting ; and
- a fourth level in which a full defocus of the solar receiver is required, without timer setting.

**8.** The monitoring method according to claim 3, wherein, in addition to the strain due to mechanical stress, the monitoring system monitors a number of physical phenomena during all the operation modes or during at least one operation mode, on the basis of criteria, these physical phenomena consisting of fatigue, corrosion, unbalanced temperature profile within a determined panel and salt freezing in tubes.

**9.** The monitoring method according to claim 8, wherein thermo-mechanical stress is monitored on the basis of a criterion active on the temperature difference $T_{o,max(x,y)}$ - $T_{back(x,y)}$ during preheating, thawing, filling and draining modes, indicating possible significant stress in the tubes and putting at risk the integrity and lifetime of the receiver, in case this difference exceeds a given threshold.

**10.** The monitoring method according to claim 8, wherein fatigue is monitored on the basis of a criterion active on $T_{o,max(x,y)}$ during preheating mode, the value of this parameter being limited by the monitoring system in order to limit the fatigue created in the tubes during said mode and further to ensure the lifetime of the receiver.

**11.** The monitoring method according to claim 8, wherein corrosion is monitored on the basis of a criterion active on maximal internal wall temperature $T_{i,max(x,y)}$ during power and circulation modes, to limit the value of this parameter and the corrosion phenomenon in order to further ensure the receiver's lifetime.

**12.** The monitoring method according to claim 8, wherein unbalanced temperature profile within a panel is monitored on the basis of a criterion active on the average of $T_{cam(x,y)}$ to ensure keeping a certain level of temperature homogeneity on all the panels.

**13.** The monitoring method according to claim 8, wherein salt freezing in the tubes is monitored on the basis of at least one criterion, called smart filling release, active during preheating mode and possibly allowing a release to the filling mode, based on an equation predicting the salt temperature in all the tubes, the criterion being validated and the filling mode activated if the predicted salt temperature on all the cells exceeds a certain threshold, said equation used to predict the above salt temperature being as follows:

$$T_{Salt,i+1} = f_3\ (T_{cam,i}, T_{back,i}, T_{Salt,i})$$

where

- $f_3$ is an empirical function ;
- $T_{Salt,i+1}$ is the predicted salt temperature entering in the cell located just above cell i ;
- $T_{cam,i}$ is the average external frontside temperature measured on cell i by the IR cameras ; and
- $T_{back,i}$ is the minimum backside temperature on cell i.

**14.** The monitoring method according to claim 3, wherein a verification of the accuracy of the inputs in the monitoring system is ensured by performing the following actions :

- consideration of acceptable ranges for the salt mass flow $\dot{M}_{salt,circuit}$ and the salt temperature at the inlet of the receiver $T_{salt\,in\text{-}out,panel}$, a warning message being communicated in case one of these two parameters is out of its respective range ;
- verification of a variation between two consecutive readings for the salt mass flow $\dot{M}_{salt,circuit}$, a recalculation being performed considering the value of the inside heat transfer coefficient correction factor, in case the difference between said two readings of $\dot{M}_{salt,circuit}$ exceeds a threshold ; and
- emittance and transmittance calibrations for the average external frontside temperature $T_{cam(x,y)}$.

**15.** A data processing apparatus comprising means for carrying out the method according to anyone of claims 3 to 14.

**16.** A computer program comprising instructions which, when the program is executed by a computer, cause the computer to carry out the method according to anyone of claims 3 to 14, when the computer is part of the monitoring system in communication with :

- the IR detection cameras located each remotely from the thermal zone of interest,
- the flowmeters used for measuring the flow rate of heat-transfer fluid in the heat exchanger tubes and the thermocouples arranged respectively at the inlet and the outlet of the exchanger tubes,
- the thermocouples arranged at the non-irradiated backside part of the heat exchanger tubes, and
- the weather station.

**17.** A non-transitory computer-readable medium having stored thereon the instructions of the program according to claim 16.

**Patentansprüche**

**1.** Solarthermisches Kraftwerk, umfassend eine Vielzahl von Heliostaten oder ein Heliostatenfeld, einen im wesentlichen zylindrischen Solarenergieempfänger (2), der aus einem Flüssigsalz-Solarempfänger besteht, der sich auf einem mittleren Turm (1) befindet und eine Außenfläche aufweist, die mit Empfängerplatten (8) bedeckt ist, wobei die Heliostaten Sonnenenergie auf die Außenfläche des Empfängers (2) reflektieren, jede Empfängerplatte (8) umfassend eine Vielzahl von Wärmetauscherrohren (9) zum Transportieren eines Wärmeübertragungsfluids, das Flüssigsalz ist, die teilweise an der Außenfläche des Empfängers freiliegen, und umfassend ein thermomechanisches Überwachungssystem, um die Unversehrtheit der Solarempfängerplattenrohre in verschiedenen Betriebsphasen sicherzustellen, das thermomechanische Überwachungssystem mindestens umfassend:

- ein Überwachungssystem;
- eine Vielzahl von Infrarotkameras (4), die sich auf dem Boden befinden, um die von der Außenfläche des Empfängers (2) emittierte Infrarotstrahlung zu messen und ein von der Temperatur der Platte in einem Bereich der Außenfläche abhängiges Signal bereitzustellen, wobei das Signal durch Übertragungseinrichtungen an das Überwachungssystem übertragen wird;
- einen oder mehrere Durchflussmesser zum Messen der Durchflussmenge des Wärmeübertragungsfluids in den Wärmetauscherrohren (9) und Thermoelemente, die jeweils an dem Einlass und dem Auslass der Wärmetauscherrohre (9) angeordnet sind, wobei die von den Durchflussmessern und den Thermoelementen bereitgestellten Messwerte an das Überwachungssystem übertragen werden, um die von dem Wärmeübertragungsfluid in dem Behälter aufgenommene Energiebilanz sowie andere thermomechanische Parameter zu berechnen (9);
- Einrichtungen zum Empfangen von Wetterdaten, die von einer Wetterstation (11), die sich auf dem Gelände des solarthermischen Kraftwerks befindet, gemessen und an das Überwachungssystem übertragen werden;

**dadurch gekennzeichnet, dass**

- sich mehrere Thermoelemente (10) an dem Solarempfänger (2) an sich befinden, wobei die Thermoelemente (10) auf der nicht bestrahlten Seite oder Rückseite der Tauscherrohre angebracht sind, sodass das Überwachungssystem in der Lage ist, die von den Thermoelementen (10) gemessenen Daten zu verwenden, um durch Interpolation eine Temperaturkarte, die die gesamte nicht bestrahlte Oberfläche des Solarempfängers (2) abdeckt, neu zu berechnen;
- das Überwachungssystem unter Verwendung des Rohremissionsvermögens $\varepsilon$, das aus den von den Infrarotkameras durchgeführten Messungen der Außenfläche des Empfängers und der von den Thermoelementen während des Zirkulationsbetriebs gemessenen Salztemperatur in den Röhren erlangt wird, und des atmosphärischen Transmissionsgrads $\tau$, der aus den Messungen der Wetterdaten erlangt wird, konfiguriert ist, um die von den Infrarotkameras (4) erfassten Rohtemperaturmessungen $\boldsymbol{T_{raw}}$ zu kalibrieren, um kalibrierte Temperaturen $T_{cam}$ zu erlangen.

**2.** Solarthermisches Kraftwerk nach Anspruch 1, wobei das Überwachungssystem konfiguriert ist, um die maximale Temperatur, das Temperaturprofil und/oder das Profil der absorbierten Leistung in jedem Wärmetauscherrohr (9) und die jedem Wärmetauscherrohr (9) zugeordneten theoretischen mechanischen Dehnungen abhängig von der von den Infrarotkameras (4) bereitgestellten Temperatur zu berechnen und/oder zuzuführen, wobei die Temperatur des Wärmeübertragungsfluids an dem Einlass und dem Auslass der Tauscherrohre (9) berücksichtigt wird, um zu kontrollieren, ob der Betriebspunkt einer auf dem Solarempfänger befindlichen Zone innerhalb einer betrieblichen Hüllkurve im theoretischen 2D-Raum Dehnung/$T_{max}$ liegt, die vordefinierte Temperatur- und Dehnungsschwellenwerte definiert, und um im Fall eines Überschreitens der vordefinierten Temperatur- und Dehnungsschwellenwerte Warnungen zu emittieren, wenn der tatsächliche Betriebspunkt außerhalb der Hüllkurve liegt, und ferner um eine zumindest teilweise Defokussierung der Heliostatstrahlung auf den Bereich zu fordern.

**3.** Verfahren zum Überwachen des solarthermischen Kraftwerks nach Anspruch 1 oder 2, wobei das Überwachen des Solarempfängers (2) während der folgenden Phasen des Tag-/Nachtbetriebs gewährleistet ist:

- Vorwärmen der leeren Rohre mit einer Sonneneinstrahlung auf eine ausreichend hohe Temperatur, um ein Gefrieren des Salzes beim Einfüllen von Flüssigsalz zu vermeiden;
- Füllen der Rohre mit Flüssigsalz, was zu statischem Salz führt, das in den Rohren vorhanden ist;
- Aktivierung des Leistungsmodus mit Salz, das in den Rohren des Empfängers zirkuliert;
- Aktivieren eines Zirkulationsmodus ohne Sonneneinstrahlung auf den Sonnenempfänger, insbesondere zu Kalibrierungszwecken;
- Leeren der Rohre, was während einer Abschaltphase durchgeführt wird;
- eventuelles Auftauen mit Sonneneinstrahlung nach einem Betrieb mit leeren Röhren, wenn nach einem Leeren gefrorenes Salz in dem Solarempfänger erkannt wurde;
- Aktivieren eines Standby-Modus während der Nacht oder wenn es an dem Empfänger keinen Betrieb gibt;

wobei das Überwachen zumindest auf einem Teil der gemessenen und/oder berechneten Parameter basiert, wie beispielsweise der äußeren Rohrvorderseitentemperatur $T_{cam}$ (12), der Rohrscheiteltemperatur $T_{0,max}$ (13), der Temperatur des Thermoelements auf der Rohrrückseite $T_{back,therm}$ (14), der minimalen äußeren Rohrrückseitentemperatur $T_{back}$ (15), der maximalen inneren Rohrvorderseitentemperatur $T_{i,max}$, der direkten normalen Einstrahlung DNI, der Umgebungslufttemperatur $T_{atm}$, der relativen Feuchtigkeit w, der Windgeschwindigkeit, der Windrichtung usw.

**4.** Überwachungsverfahren nach Anspruch 3, wobei während eines Vorwärm-, Auftau-, Füll- und Leerungsmodus als Parameter die Rohrscheiteltemperatur $T_{0,max}$ (13), die äußere Rohrvorderseitentemperatur $T_{cam}$ (12) und minimale äußere Rückseitentemperatur $T_{back}$ (15) verwendet werden, wobei $T_{0,max}$ (13) und $T_{back}$ (15) bei der Zellauflösung (x, y) durch die jeweiligen analytischen Gleichungen berechnet werden:

-

$$T_{0,max(x,y)} = f_1\ (T_{cam(x,y)})$$

wobei:

o $f_1$ eine empirische Funktion ist, die von der Winkelmessung der IR-Kameras abhängt;
o $T_{cam(x,y)}$ die durchschnittliche äußere Vorderseitentemperatur ist, die von den IR-Kameras an jeder Zelle gemessen und von dem Steuersystem kalibriert wird;

-

$$T_{back} = f(T_{cam},\ T_{back,therm}),$$

für Zellen mit einem Thermoelement und interpoliert für Zellen ohne Thermoelement.

**5.** Überwachungsverfahren nach Anspruch 3, wobei während eines statischen Salzmodus als Parameter die Rohrscheiteltemperatur $T_{0,max}$ (13), die äußere Rohrvorderseitentemperatur $T_{cam}$ (12) und minimale äußere Rückseitentemperatur $T_{back}$ (15) verwendet werden, wobei $T_{0,max}$ (13) und $T_{back}$ (15) bei der Zellauflösung (x, y) durch die folgende analytische Gleichung berechnet werden:

$$T_{0,max(x,y)} = f_2(T_{cam(x,y)})$$

wobei:

o $f_2(f_2 \neq f_1)$ eine empirische Funktion ist, die von der Winkelmessung der IR-Kameras abhängt;
o $T_{cam(x,y)}$ die durchschnittliche äußere Vorderseitentemperatur ist, die von den IR-Kameras an jeder Zelle gemessen und von dem Steuersystem kalibriert wird;

-

$$T_{back} = f(T_{cam},\ T_{back,therm}),$$

für Zellen mit einem Thermoelement und interpoliert für Zellen ohne Thermoelement.

**6.** Überwachungsverfahren nach Anspruch 3, wobei das Überwachungssystem eine Vielzahl von Alarmstufen verwendet, um schrittweise Maßnahmen zu fordern, um die Systemreaktion im Falle einer Gefahr für die Integrität des Solarempfängers zu glätten und die Auswirkungen auf den Betrieb so weit wie möglich zu minimieren, wobei jede Alarmstufe einen Schwellenwert und eine Zeiteinstellung für ihre Aktivierung verwendet, was bedeutet, dass ein Alarm aktiviert wird, sobald der Schwellenwert erreicht/überschritten wurde und die eingestellte Zeit abgelaufen ist.

**7.** Überwachungsverfahren nach Anspruch 6, wobei vier Alarmstufen verwendet werden:

- eine erste Stufe, bei der eine Warnung an einen Bediener gesendet wird, wenn ein erster Schwellenwert erreicht ist, ohne dass weitere Maßnahmen erforderlich sind und ohne dass ein Zeitgeber eingestellt wird;
- eine zweite Stufe, in der die Warnung die Übermittlung von Koordinaten eines Rechtecks, das problematische Zellen enthält, und eine Schätzung der fokussierten Leistung, die entfernt werden muss, um das überwachte Kriterium wieder einzuhalten, mit einer Zeiteinstellung umfasst;
- eine dritte Stufe, in der eine vollständige Defokussierung des Sonnenempfängers erforderlich ist, mit einer Zeitgebereinstellung; und
- eine vierte Stufe, bei der eine vollständige Defokussierung des Sonnenempfängers erforderlich ist, ohne dass ein Zeitgeber eingestellt wird.

**8.** Überwachungsverfahren nach Anspruch 3, **dadurch gekennzeichnet, dass** das Überwachungssystem neben der Belastung durch mechanische Beanspruchung eine Reihe von physikalischen Phänomenen während aller Betriebsarten oder während mindestens einer Betriebsart kriteriengestützt überwacht, wobei diese physikalischen Phänomene aus Ermüdung, Korrosion, unausgeglichenem Temperaturprofil innerhalb einer bestimmten Platte und Gefrieren von Salz in Rohren bestehen.

**9.** Überwachungsverfahren nach Anspruch 8, wobei die thermomechanische Beanspruchung basierend auf einem Kriterium überwacht wird, das bei der Temperaturdifferenz $T_{0,max(x,y)}$ - $T_{back(x,y)}$ während der Modi Vorheizen, Auftauen, Füllen und Leeren aktiv ist und auf eine mögliche signifikante Beanspruchung der Rohre hinweist und die Unversehrtheit und Lebensdauer des Empfängers gefährdet, wenn diese Differenz einen gegebenen Schwellenwert überschreitet.

**10.** Überwachungsverfahren nach Anspruch 8, wobei Ermüdung basierend auf einem Kriterium überwacht wird, das auf

$T_{0,max(x,y)}$ während des Vorwärmmodus einwirkt, wobei der Wert dieses Parameters durch das Überwachungssystem begrenzt wird, um die in den Rohren während dieses Modus erzeugte Ermüdung zu begrenzen und ferner die Lebensdauer des Empfängers zu gewährleisten.

**11.** Überwachungsverfahren nach Anspruch 8, wobei die Korrosion basierend auf einem Kriterium überwacht wird, das auf die maximale Innenwandtemperatur $T_{i,max(x,y)}$ während der Leistungs- und Zirkulationsmodi einwirkt, um den Wert dieses Parameters und das Korrosionsphänomen zu begrenzen, um die Lebensdauer des Empfängers weiter zu gewährleisten.

**12.** Überwachungsverfahren nach Anspruch 8, wobei ein unausgeglichenes Temperaturprofil innerhalb einer Platte basierend auf einem Kriterium überwacht wird, das bei dem Durchschnitt von $T_{cam(x,y)}$ aktiv ist, um die Einhaltung eines bestimmten Niveaus der Temperaturhomogenität an allen Platten zu gewährleisten.

**13.** Überwachungsverfahren nach Anspruch 8, wobei ein Gefrieren von Salz in den Rohren basierend auf mindestens einem Kriterium, der so genannten intelligenten Füllfreigabe, überwacht wird, das während des Vorwärmmodus aktiv ist und möglicherweise eine Freigabe zum Füllmodus ermöglicht, basierend auf einer Gleichung, die die Salztemperatur in der Gesamtheit der Rohre vorhersagt, wobei das Kriterium validiert und der Füllmodus aktiviert wird, wenn die vorhergesagte Salztemperatur in der Gesamtheit der Zellen einen bestimmten Schwellenwert überschreitet, wobei die Gleichung, die zum Vorhersagen der oben genannten Salztemperatur verwendet wird, wie folgt ist:

$$T_{Salt,i+1} = f_3\ (T_{cam,i}, T_{back,i}, T_{Salt,i})$$

wobei

- $f_3$ eine empirische Funktion ist;
- $T_{Salt,i+i}$ die vorhergesagte Salztemperatur ist, die in die Zelle direkt über Zelle *i* eintritt;
- $T_{cam,i}$ die von den IR-Kameras an der Zelle *i* gemessene durchschnittliche äußere Vorderseitentemperatur ist; und
- $T_{back,i}$ die minimale Rückseitentemperatur an Zelle *i* ist.

**14.** Überwachungsverfahren nach Anspruch 3, wobei eine Überprüfung der Genauigkeit der Eingänge in dem Überwachungssystem durch Durchführen der folgenden Maßnahmen gewährleistet wird:

- Berücksichtigen der zulässigen Bereiche für den Salzmassenstrom $M_{satt,circuit}$ und die Salztemperatur an dem Einlass des Empfängers $T_{salt\ in\text{-}out,panel}$, wobei eine Warnmeldung übermittelt wird, wenn einer dieser zwei Parameter außerhalb seines jeweiligen Bereichs liegt;
- Überprüfen einer Abweichung zwischen zwei aufeinanderfolgenden Ablesungen für den Salzmassenstrom $M_{salt,circuit}$, wobei eine Neuberechnung unter Berücksichtigung des Werts des Korrekturfaktors für den inneren Wärmeübergangskoeffizienten durchgeführt wird, wenn die Differenz zwischen den zwei Ablesungen von $M_{salt,circuit}$ einen Schwellenwert überschreitet; und
- Kalibrierungen des Emissions- und Transmissionsvermögens für die durchschnittliche äußere Vorderseitentemperatur $T_{cam(x,y)}$.

**15.** Datenverarbeitungsgerät, umfassend Einrichtungen zum Durchführen des Verfahrens nach einem der Ansprüche 3 bis 14.

**16.** Computerprogramm, umfassend Anweisungen, die, wenn das Programm von einem Computer ausgeführt wird, den Computer veranlassen, das Verfahren nach einem der Ansprüche 3 bis 14 durchzuführen, wenn der Computer Teil des Überwachungssystems ist, das mit Folgendem in Verbindung ist:

- den IR-Detektionskameras, die sich jeweils in einiger Entfernung von dem thermischen Bereich von Interesse befinden,
- den Durchflussmessern, die zur Messung des Durchflusses des Wärmeübertragungsfluids in den Wärmetauscherrohren verwendet werden, und den Thermoelemente, die jeweils an dem Einlass und dem Auslass der Wärmetauscherrohre angeordnet sind,
- den Thermoelementen, die an der nicht bestrahlten Rückseite der Wärmetauscherrohre angeordnet sind, und

- der Wetterstation.

**17.** Nicht-übertragbares computerlesbares Medium, auf dem die Anweisungen des Programms nach Anspruch 16 gespeichert sind.

**Revendications**

**1.** Centrale solaire thermodynamique comprenant une pluralité d'héliostats ou un champ d'héliostats, un récepteur d'énergie solaire (2) sensiblement cylindrique, consistant en un récepteur solaire à sels fondus, situé au sommet d'une tour centrale (1) et ayant une surface externe recouverte de panneaux récepteurs (8), les héliostats réfléchissant l'énergie solaire vers ladite surface externe du récepteur (2), chaque panneau récepteur (8) comprenant une pluralité de tubes échangeurs de chaleur (9) destinés à transporter un fluide caloporteur constitué d'un sel fondu, lesquels sont partiellement exposés sur la surface externe du récepteur et comprenant un système de surveillance thermomécanique afin d'assurer l'intégrité des tubes des panneaux du récepteur solaire dans différentes phases de fonctionnement, ledit système de surveillance thermomécanique comprenant au moins :

- un système de surveillance ;
- une pluralité de caméras infrarouges (4) situées au sol pour mesurer le rayonnement infrarouge émis par la surface externe du récepteur (2) et fournir un signal dépendant de la température du panneau dans une zone de ladite surface externe, ledit signal étant transmis au système de surveillance par des moyens de transmission ;
- un ou plusieurs débitmètres pour mesurer le débit du fluide caloporteur dans les tubes échangeurs de chaleur (9) et des thermocouples disposés respectivement à l'entrée et à la sortie des tubes échangeurs (9), les mesures fournies par les débitmètres et les thermocouples étant transmises au système de surveillance pour calculer le bilan d'énergie absorbée par le fluide caloporteur dans le récepteur ainsi que d'autres paramètres thermomécaniques (9) ;
- des moyens pour recevoir des données météorologiques mesurées et transmises au système de surveillance par une station météo (11) située sur le site de la centrale solaire thermodynamique ;

**caractérisée en ce que**

- plusieurs thermocouples (10) sont situés sur le récepteur solaire (2) lui-même, lesdits thermocouples (10) étant fixés sur le côté non exposé ou la face arrière des tubes échangeurs, de sorte que le système de surveillance est capable d'utiliser les données mesurées par les thermocouples (10) pour recalculer par interpolation une cartographie de température couvrant l'intégralité de la surface non exposée du récepteur solaire (2) ;
- en utilisant l'émissivité du tube $\varepsilon$ obtenue à partir des mesures de la surface externe du récepteur obtenues par les caméras infrarouges et de la température du sel dans les tubes obtenue à partir des thermocouples en mode circulation, ainsi que la transmissivité atmosphérique $\tau$ obtenue à partir des mesures des données météorologiques, le système de surveillance est configuré pour étalonner les mesures brutes de température $T_{raw}$ acquises par les caméras infrarouges (4), de manière à obtenir des températures étalonnées $T_{cam}$.

**2.** Centrale solaire thermodynamique selon la revendication 1, dans laquelle le système de surveillance est configuré pour calculer et/ou fournir respectivement la température maximale, le profil de température et/ou le profil de puissance absorbée dans chaque tube échangeur de chaleur (9) et les déformations mécaniques théoriques attribuées à chaque tube échangeur de chaleur (9) en fonction de la température fournie par les caméras infrarouges (4), en prenant en compte la température du fluide caloporteur à l'entrée et à la sortie desdits tubes échangeurs (9), afin de contrôler si le point de fonctionnement d'une zone située sur le récepteur solaire se trouve dans une enveloppe de fonctionnement dans l'espace 2D déformation théorique/$T_{max}$ définissant des seuils de température et de déformation prédéfinis et afin d'émettre des alertes en cas de dépassement desdits seuils de température et de déformation prédéfinis, lorsque le point de fonctionnement réel est en dehors de ladite enveloppe, et de demander en outre au moins une défocalisation partielle du rayonnement des héliostats sur ladite zone.

**3.** Procédé de surveillance de la centrale solaire thermodynamique selon la revendication 1 ou 2, dans lequel la surveillance du récepteur solaire (2) est assurée pendant les phases suivantes de fonctionnement jour/nuit :

- préchauffage de tubes vides avec un flux solaire à une température suffisamment élevée pour éviter le gel du sel lors du remplissage en sel fondu
- remplissage des tubes avec du sel fondu conduisant à la présence de sel statique dans les tubes ;
- activation du mode puissance avec mise en circulation du sel dans les tubes du récepteur ;
- activation du mode circulation, sans flux solaire sur le récepteur solaire, en particulier à des fins d'étalonnage ;

- vidange des tubes réalisée pendant une phase d'arrêt ;
- décongélation éventuellement réalisée avec un flux solaire après fonctionnement, avec des tubes vides, si du sel gelé a été détecté dans le récepteur solaire après vidange ;
- activation du mode veille pendant la nuit ou lorsqu'aucune opération n'est en cours sur le récepteur ;

ladite surveillance étant basée au moins sur une partie des paramètres mesurés et/ou calculés tels que la température externe de la face avant du tube $T_{cam}$ (12), la température de crête du tube $T_{o,\ max}$ (13), la température du thermocouple sur la face arrière du tube $T_{back\ therm}$ (14), la température minimale externe de la face arrière du tube $T_{back}$ (15), la température interne maximale de la face avant du tube $T_{i,max}$, l'irradiation normale directe (DNI), la température de l'air ambiant $T_{atm}$, l'humidité relative w, la vitesse du vent, la direction du vent, etc.

**4.** Procédé de surveillance selon la revendication 3, dans lequel, pendant les modes de préchauffage, de décongélation, de remplissage et de vidange, les paramètres utilisés sont la température de crête du tube $T_{o,max}$ (13), la température externe de la face avant du tube $T_{cam}$ (12) et la température minimale externe de la face arrière $T_{back}$ (15), dans lequel $T_{o,max}$ (13) et $T_{back}$ (15) sont calculées à la résolution cellule (x, y) par les équations analytiques respectives :

-

$$T_{o,max}(x,y) = f_1(T_{cam}(x,y))$$

où :

◦ $f_1$ est une fonction empirique dépendant de l'angle de mesure des caméras IR ;
◦ $T_{cam}(x,y)$ est la température externe moyenne de la face avant mesurée sur chaque cellule par les caméras IR, et étalonnée par le système de contrôle ;

-

$$T_{back} = f(T_{cam},\ T_{back\ therm})$$

sur les cellules comprenant un thermocouple et interpolée sur les cellules sans thermocouple.

**5.** Procédé de surveillance selon la revendication 3, dans lequel, pendant le mode sel statique, les paramètres utilisés sont la température de crête du tube $T_{o,max}$ (13), la température externe de la face avant du tube $T_{cam}$ (12) et la température minimale externe de la face arrière du tube $T_{back}$ (15), dans lequel $T_{o,max}$ (13) et $T_{back}$ (15) sont calculées à la résolution cellule (x, y) par l'équation analytique

-

$$T_{o,max}(x,y) = f_2(T_{cam(x,y)})$$

où :

◦ $f_2$ $(f_2 \neq f_1)$ est une fonction empirique dépendant de l'angle de mesure des caméras IR ;
◦ $T_{cam(x,y)}$ est la température externe moyenne de la face avant mesurée sur chaque cellule par les caméras IR, et étalonnée par le système de contrôle,

-

$$T_{back} = f\ (T_{cam},\ T_{back,\ therm})$$

sur les cellules comprenant un thermocouple et interpolée sur les cellules sans thermocouple.

**6.** Procédé de surveillance selon la revendication 3, dans lequel une pluralité de niveaux d'alarme sont utilisés par le système de surveillance pour demander des actions graduelles afin de lisser la réaction du système en cas de danger pour l'intégrité du récepteur solaire et de minimiser autant que possible l'impact sur l'exploitation, chaque niveau d'alarme utilisant un seuil et un réglage de temporisation pour son activation, ce qui signifie qu'une alarme sera activée une fois que la valeur du seuil a été atteinte/dépassée et qu'un temps défini s'est écoulé.

**7.** Procédé de surveillance selon la revendication 6, dans lequel quatre niveaux d'alarme sont utilisés :

- un premier niveau dans lequel un avertissement est envoyé à un opérateur lorsqu'un premier seuil a été atteint, sans autre action requise et sans réglage de temporisation ;
- un deuxième niveau dans lequel ledit avertissement comprend la communication des coordonnées d'un rectangle incluant des cellules problématiques et une estimation de la puissance focalisée à retirer afin de respecter à nouveau le critère surveillé dépassé, avec un réglage de temporisation ;
- un troisième niveau dans lequel une défocalisation complète du récepteur solaire est demandée, avec un réglage de temporisation ; et
- un quatrième niveau dans lequel une défocalisation complète du récepteur solaire est demandée, sans réglage de temporisation.

**8.** Procédé de surveillance selon la revendication 3, dans lequel, en plus de la déformation due à la contrainte mécanique, le système de surveillance surveille un certain nombre de phénomènes physiques pendant tous les modes de fonctionnement ou pendant au moins un mode de fonctionnement, sur la base de critères, ces phénomènes physiques consistant en la fatigue, la corrosion, un profil de température déséquilibré au sein d'un panneau déterminé et le gel du sel dans les tubes.

**9.** Procédé de surveillance selon la revendication 8, dans lequel la contrainte thermomécanique est surveillée sur la base d'un critère actif sur la différence de température $\boldsymbol{T_{o,max}(x,y) - T_{back}(x,y)}$ pendant les modes de préchauffage, de décongélation, de remplissage et de vidange, indiquant une contrainte potentiellement significative dans les tubes et mettant en danger l'intégrité et la durée de vie du récepteur, dans le cas où cette différence dépasse un seuil donné.

**10.** Procédé de surveillance selon la revendication 8, dans lequel la fatigue est surveillée sur la base d'un critère actif sur $\boldsymbol{T_{o,max}(x,y)}$ pendant le mode de préchauffage, la valeur de ce paramètre étant limitée par le système de surveillance afin de limiter la fatigue créée dans les tubes pendant ledit mode et d'assurer en outre la durée de vie du récepteur.

**11.** Procédé de surveillance selon la revendication 8, dans lequel la corrosion est surveillée sur la base d'un critère actif sur la température maximale de la paroi interne $\boldsymbol{T_{i,max(x,y)}}$ pendant les modes puissance et circulation, pour limiter la valeur de ce paramètre et le phénomène de corrosion afin d'assurer en outre la durée de vie du récepteur.

**12.** Procédé de surveillance selon la revendication 8, dans lequel un profil de température déséquilibré au sein d'un panneau est surveillé sur la base d'un critère actif sur la moyenne de $\boldsymbol{T_{cam}(x,y)}$ afin d'assurer le maintien d'un certain niveau d'homogénéité de température sur tous les panneaux.

**13.** Procédé de surveillance selon la revendication 8, dans lequel le gel du sel dans les tubes est surveillé sur la base d'au moins un critère, appelé libération intelligente du remplissage, actif pendant le mode de préchauffage et permettant éventuellement une libération vers le mode de remplissage, sur la base d'une équation prédisant la température du sel dans tous les tubes, le critère étant validé et le mode de remplissage étant activé si la température prédite du sel sur toutes les cellules dépasse un certain seuil, ladite équation utilisée pour prédire la température du sel susmentionnée étant la suivante :

$$T_{Salt,i+1} = f_3\ (T_{cam,i}, T_{back,i}, T_{Salt,i})$$

Où

- $f_3$ est une fonction empirique ;
- $T_{salt,i+1}$ est la température prédite du sel entrant dans la cellule située juste au-dessus de la cellule *i* ;
- $T_{cam,i}$ est la température externe moyenne de la face avant mesurée sur la cellule *i* par les caméras IR ; et
- $T_{back,i}$ est la température minimale de la face arrière sur la cellule *i.*

**14.** Procédé de surveillance selon la revendication 3, dans lequel une vérification de l'exactitude des entrées dans le système de surveillance est assurée en réalisant les actions suivantes :

- prise en compte de plages acceptables pour le débit massique de sel $M_{salt,circuit}$, et la température du sel à l'entrée du récepteur $T_{salt\ in\text{-}out,panel}$, un message d'avertissement étant communiqué dans le cas où l'un de ces deux paramètres est en dehors de sa plage respective ;
- vérification d'une variation entre deux lectures consécutives du débit massique de sel $M_{salt,circuit}$, un recalcul étant effectué en tenant compte de la valeur du facteur de correction du coefficient d'échange thermique interne, dans le cas où la différence entre lesdites deux lectures de $M_{salt,circuit}$ dépasse un seuil ; et
- étalonnages de l'émissivité et de la transmissivité pour la température externe moyenne de la face avant $T_{cam}(x,y)$.

**15.** Appareil de traitement de données comprenant des moyens pour mettre en œuvre le procédé selon l'une quelconque des revendications 3 à 14.

**16.** Programme informatique comprenant des instructions qui, lorsque le programme est exécuté par un ordinateur, amènent l'ordinateur à mettre en œuvre le procédé selon l'une quelconque des revendications 3 à 14, lorsque l'ordinateur fait partie du système de surveillance en communication avec

- les caméras de détection IR situées chacune à distance de la zone thermique d'intérêt,
- les débitmètres utilisés pour mesurer le débit du fluide caloporteur dans les tubes échangeurs de chaleur et les thermocouples disposés respectivement à l'entrée et à la sortie des tubes échangeurs,
- les thermocouples disposés sur la partie arrière non exposée des tubes échangeurs de chaleur, et
- la station météo.

**17.** Support non transitoire lisible par ordinateur sur lequel sont stockées les instructions du programme selon la revendication 16.

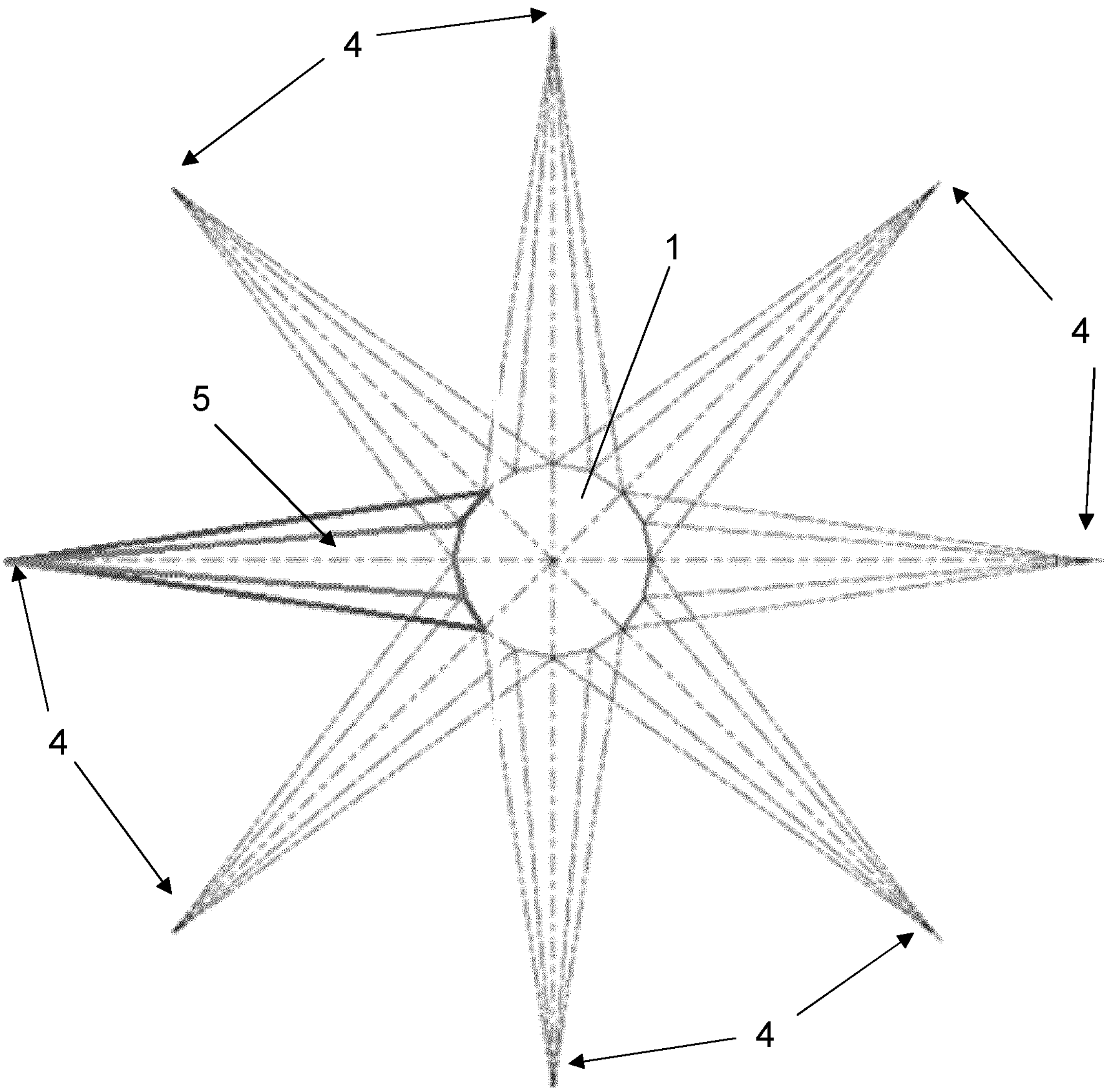


FIG.1

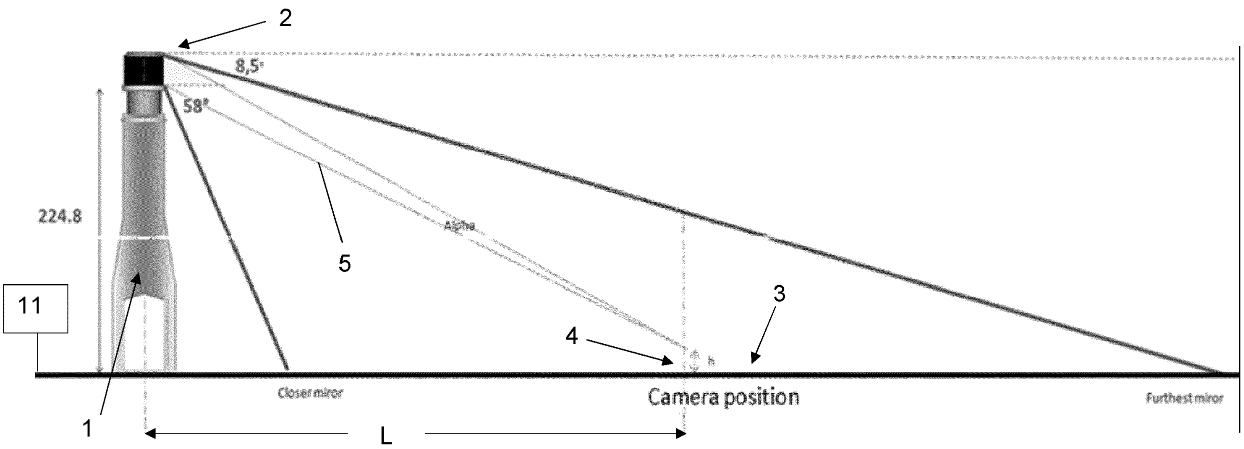
2
8,5°
58°
224.8
Alpha
5
3
11
4
h
Closer miror
Camera position
Furthest miror
1
L

FIG.2

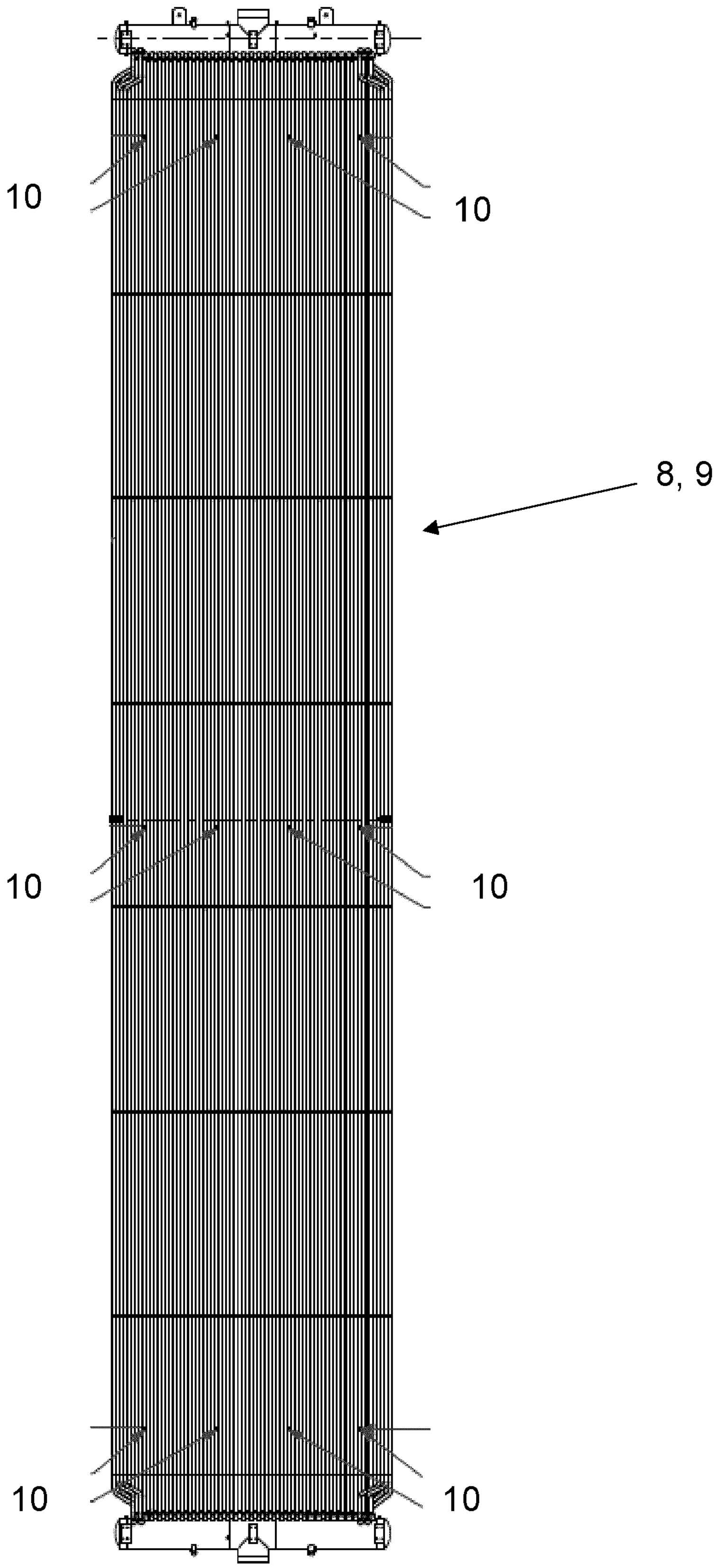


FIG. 3

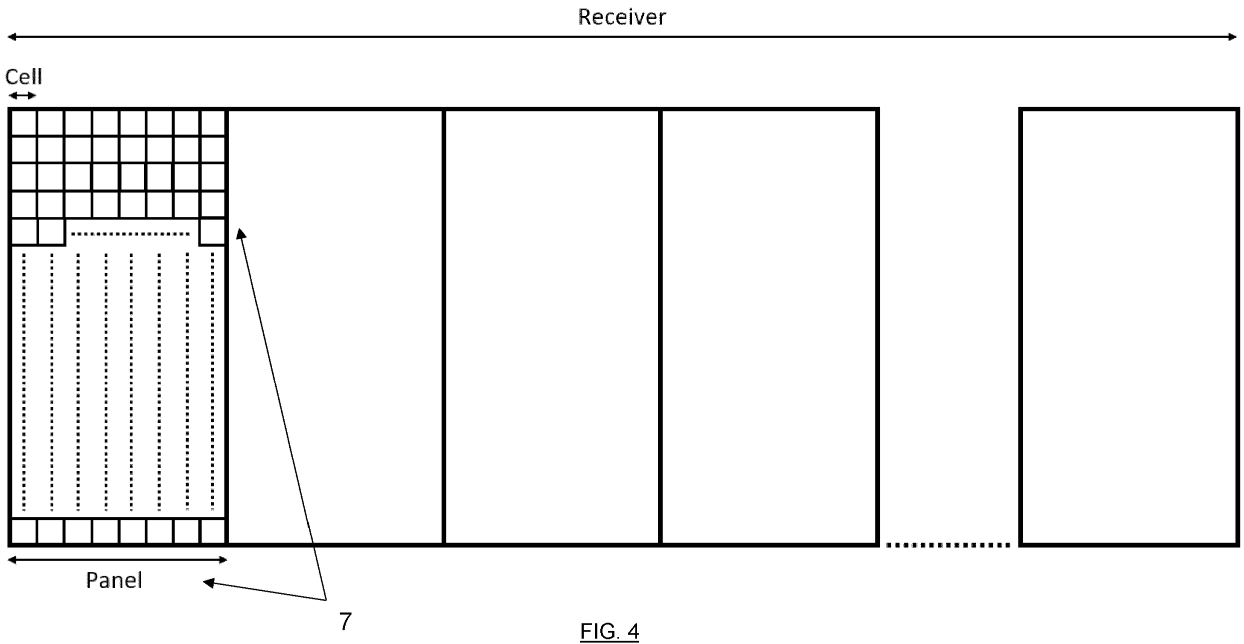


FIG. 4

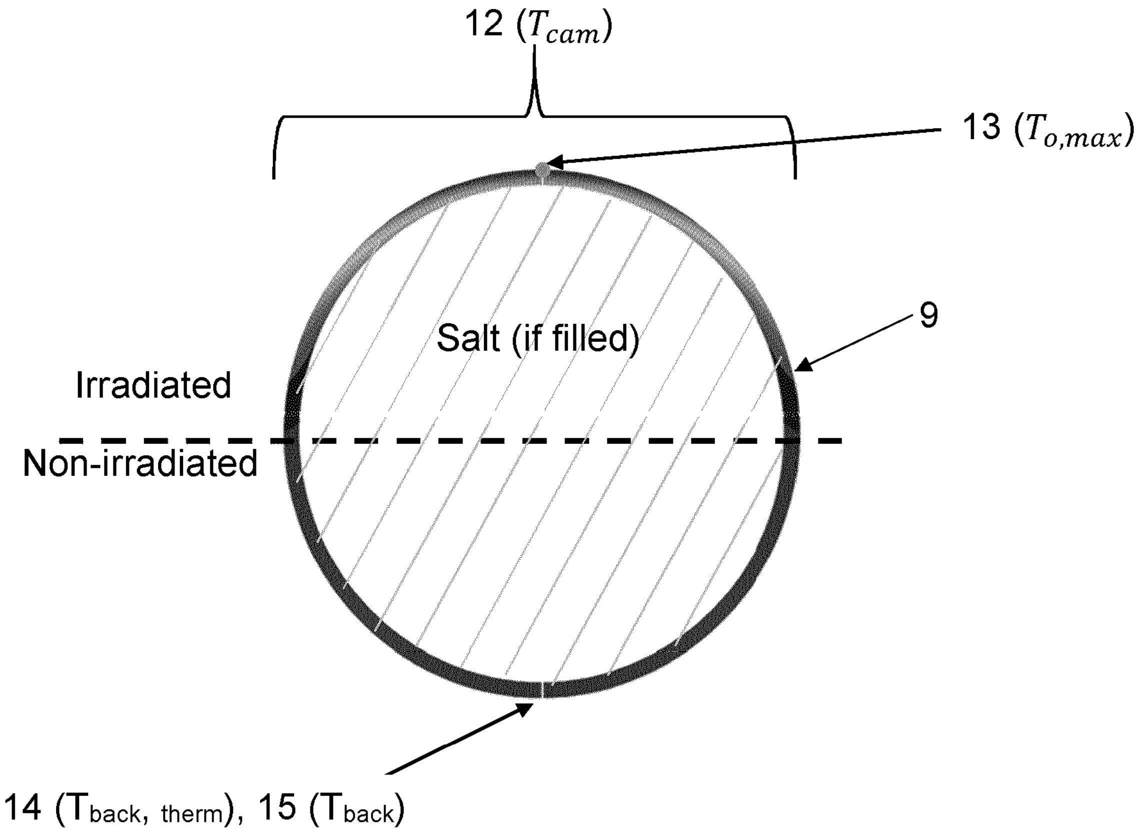
12 ($T_{cam}$)
13 ($T_{o,max}$)
9
Salt (if filled)
Irradiated
Non-irradiated
14 ($T_{back,\ therm}$), 15 ($T_{back}$)

FIG. 5

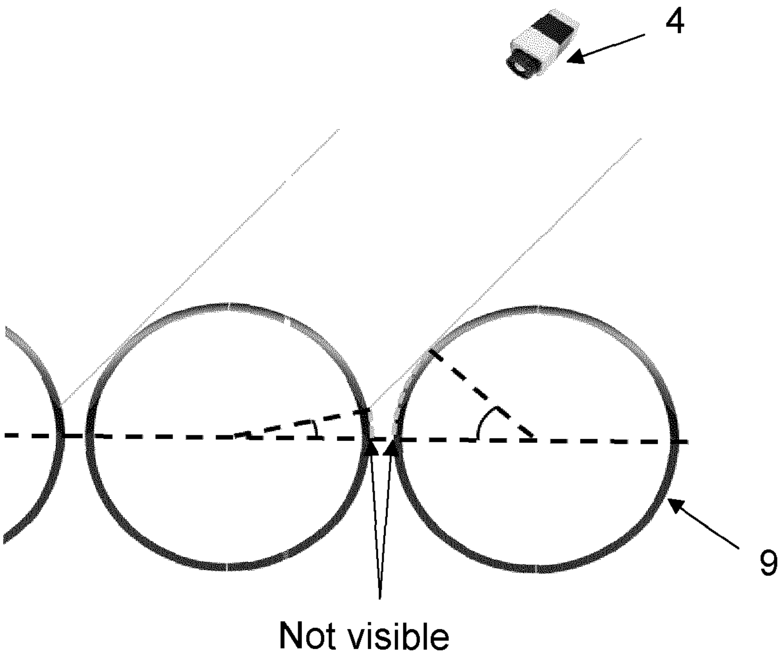


FIG. 6

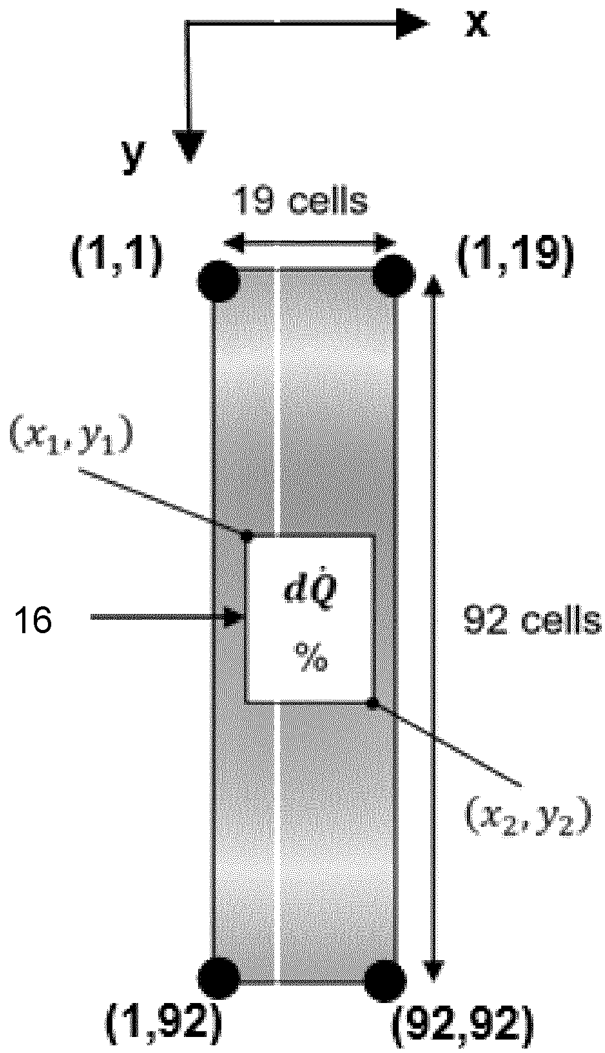


FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018177696 A1
- US 20080265162 A1
- US 20130088604 A1
- US 5689734 A
- WO 2004020926 A1
- US 20130104963 A1
- US 8360051 B2
- US 9222702 B2
- US 20130139804 A1
- WO 2010017415 A2
- US 20040086021 A1
- US 8931475 B2